# EUROPEAN PATENT SPECIFICATION

(11) **EP 0 741 736 B1**
(45) Date of publication and mention of the grant of the patent: **20.10.1999**
(21) Application number: 95906428.8
(22) Date of filing: 26.01.1995
(51) Int. Cl.: C07F 9/09, C07F 9/22, C10M 137/08, C10M 141/10

(54) **ANTI-WEAR ADDITIVES AND THEIR USE**
VERSCHLEISSSCHUTZADDITIVE UND IHRE VERWENDUNG
ADDITIFS ANTI-USURE ET LEUR UTILISATION

(30) Priority: 29.01.1994 GB 9401710
(43) Date of publication of application: 13.11.1996
(73) Proprietor: CASTROL LIMITED, Swindon, Wiltshire SN3 1RE (GB)
(72) Inventor: COATES, David A., Oxfordshire OX10 9RJ (GB)
(74) Representative: Lewis, Pauline Therese
(86) International application number: GB9500148
(87) International publication number: WO9520592

(56) References cited:
- EP-A- 0 460 317
- WO-A-87/07637
- WO-A-95/06094
- US-A- 3 425 815

## Description

This invention relates to industrial fluids such as hydraulic fluids and gear oils.

It is known that zinc-based additives can be included in industrial fluids, such as gear oils, comprising a mineral base oil or a natural or synthetic ester base fluid, to impart high performance wear resistance. However, it is desired to move away from the use of materials containing zinc which cause problems in use, such as hydrolytic stability, to additives which are zinc free and ashless.

US-A-3,425,815 discloses a fuel having improved deicing and detergent properties. The fuel comprises from 5% to 95% by weight of an alkyl phosphate salt of an N-alkyl-diaminoalkane and from 5% to 95% by weight of an alkyl phosphate salt of an alkyl-monoamine.

EP-A-0 460 317A discloses the use of (a) at least one sulphur-containing antiwear or extreme pressure agent, (b) at least one amine salt of at least one partially esterified monothiophosphoric acid, and (c) at least one amine salt of at least one partially esterified phosphoric acid, to increase the wear resistance and improve the extreme pressure properties of polyalkylene glycol based lubricants (see the first three paragraphs on page 2).

WO 95/06094, which was published on 2nd March 1995, discloses a lubricant composition containing an amine phosphate.

The present invention is concerned with the problem of improving anti-wear, extreme pressure and corrosion protection properties of an industrial fluid comprising a mineral base oil or a natural or synthetic ester base fluid, without the use of zinc based additives.

In accordance with the present invention there is provided use of an additive composition comprising an amine phosphate which is the reaction product of at least one n-heptyl acid phosphate with at least one aliphatic amine having at least 9 carbon atoms, to improve antiwear, corrosion resistance or extreme pressure properties of an industrial fluid comprising a mineral base oil or a natural or synthetic ester base fluid.

The n-heptyl acid phosphate may be the monoheptyl phosphate or diheptylphosphate or a mixture thereof, suitably a mixture of about 50% mono and 50% diheptyl phosphate.

The aliphatic amine preferably has at least 12 carbon atoms. The aliphatic moiety is preferably an alkyl, alkenyl or alkoxyalkyl group. The amine is preferably a p-amine. Suitable amines are the C₁₂₋₁₄ alkylamine available commercially as "Primene 81R" from the Rohm and Haas Company or the C₁₈ alkenylamine of formula H₂N(CH₂)₇ = (CH₂)₁₁ available commercially as "Armeen O" from Akzo Chemie Nederland BV, or "Radiamine 6172" from Petrofina s.a., Belgium. Alternatively, an alkoxyalkylamine such as 3-isononyloxypropylamine (available from Hoechst AG) may be employed.

The concentration of the amine phosphate ingredient will be selected dependent on the base fluid chosen and the intended use of the fluid. It has been found that, for hydraulic use, using a mineral base fluid, a preferred concentration is at least about 0.05 and preferably at least 0.09 percent by weight, while for gear oil use, the preferred concentration of amine phosphate is at least about 0.09 and preferably at least 0.17 percent by weight. The upper limit of a satisfactory concentration range can be established dependent on economic considerations and required performance.

The additive composition may contain a wide variety of additives in addition to the amine phosphate. Thus, dependent on the end use, the composition may contain a polysulphide load carrying and anti-wear material. Other additives which may be used include dialkylhydrogen phosphite or tri-alkyl or tri-aryl phosphates (for the purpose of load carrying and anti-wear), copper passivators, such as alkyl dithiadiazoles and benzotriazole derivatives, alkyl p-amines (for the purpose of corrosion inhibition and anti-wear), antifoam agents such as silicon based or non-silicon Mobilad C402 and anti-oxidants such as 2,6-di-tert-butyl-4-methyl phenol, Additin 10 from Rhein Chemie Rheinau GmbH and Irganox L57 from Ciba-Geigy Industrial Chemicals. The exact composition will depend on the intended use and nature of the base fluid.

The amine phosphate may be prepared by directly reacting the amine with the N-heptyl acid phosphate (preferably in substantially equimolar proportions), followed by cooling of the reaction mixture which is exothermic. The product is then incorporated with the other additive components to produce an additive composition for incorporation at appropriate concentration in the base fluid.

Alternatively, the amine phosphate may be prepared in situ by separately adding to a suitable diluent the acid phosphate and the amine and blending, suitably at elevated temperature, for example, about 60^{º}C before adding the remaining additives, thus avoiding any problems of exothermicity. The diluent may be the, or one or more of the, major components of the composition, suitably a polysulphide component but it will be appreciated that the diluent may be, for example, the ultimately intended base fluid, such as BP base fluid. Preferably the composition includes a dialkyl hydrogen phosphite which is suitably added after the other additives such as copper passivators, corrosion inhibitors, anit-foam agents and antioxidants.

The invention will now be illustrated with reference to the following examples.

### Example 1 Preparation of C₁₂₋₁₄-amine n-heptyl phosphate

### Projected Formula:

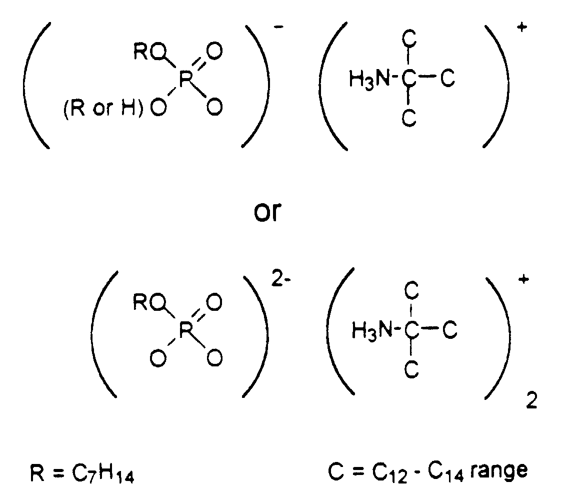

Primene 81R (a C₁₂₋₁₄ amine available from Rohm and Haas) was added to a glass lined (or stainless steel) vessel. n-Heptyl acid phosphate (available from Albright and Wilson) or Elf Atochem was added slowly with stirring. The two reactants were employed in the ratio of 59.7% n-heptyl acid phospate to 40.3% Primene 81R.

The reaction was exothermic. Blending was continued for at least 30 minutes and the reaction mixture allowed to cool.

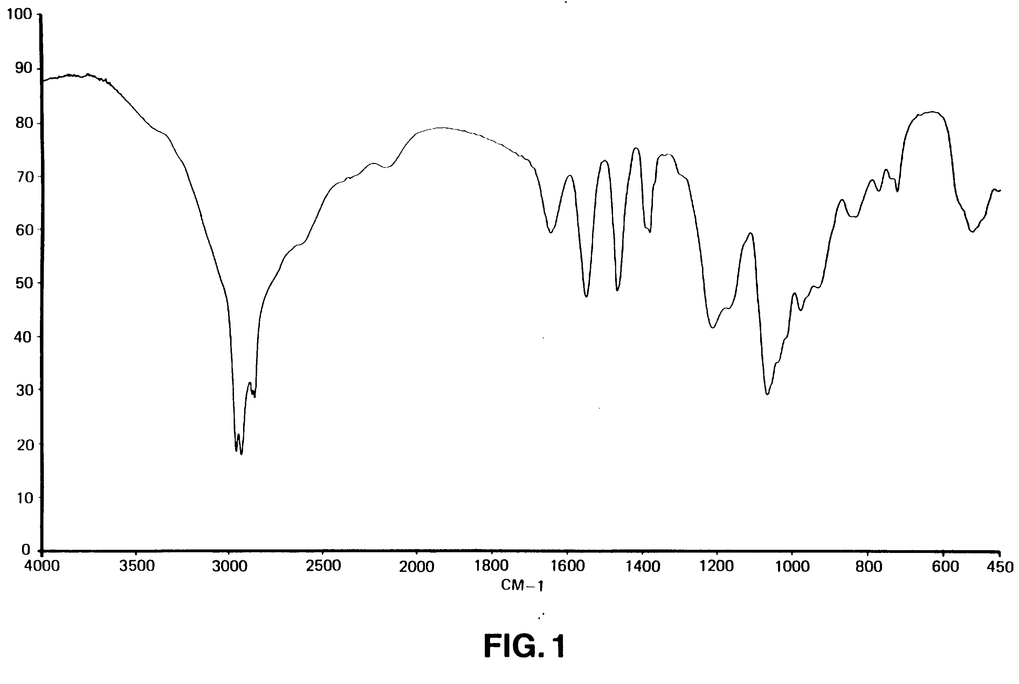

The resulting product was a light yellow liquid which was characterised by the infrared spectrum (measured by KBr disc) given in Figure 1 and the analytical data below:

| | |
|---|---|
| Phosphorus | 6.80 to 8.49% |
| Nitrogen | 2.82 to 3.23% |
| Density (20°C) | 0.96 g/ml approx. |
| Flash point (PMC) | 92°C min. |
| Viscosity (100°C) | 48 mm²/sec (typical) |

### Example 2 Preparation of additive composition.

An additive composition suitable for use in a hydraulic fluid or gear oil was prepared by the following altemaitve methods:
A) To a warmed solution of polysulphide (TPS 32 available from Elf Atochem) to which was dissolved the antioxidant (Additin 10), there was added the n-heptyl amine phosphate prepared as described in Example 1 above and other additives as given below followed by blending for a minimum of 30 minutes and cooling.
B) Polysulphide and Additin 10 were added to a blend vessel to which was further added n-heptyl acid phosphate at 6.23% and Primene 81R at 4.20%. The reaction mixture was heated to a maximum temperature of 60°C and blending continued to homogeneity and until all the antioxidant .(Additin 10) was dissolved. The remaining additives, as given below, were then added, blending continued for a minimum of 30 minutes and the mixture cooled.

The resulting additive composition can be used (depending on the application) as follows in terms of a percentage range (by weight):

| | Range | Example |
|---|---|---|
| Polysulphide | 50 to 75 | 61.35 |
| Amine phospate | 4 to 28 | 10.43 |
| Dialkyl hydrogen phosphite (e.g. dibutyl hydrogen phosphite) | 4 to 28 | 6.14 |
| Copper passivator (e.g. thiadiazole passivator) | 6 to 17 | 3.68 |
| Alkyl p-amine | 4 to 28 | 7.06 |
| Anti-foam agent (e.g. Mobilad C405) | 0 to 1 | 0.30 |
| Antioxidants (e.g. phenolic/aminic mixture) | 0 to 12 | 11.04 |

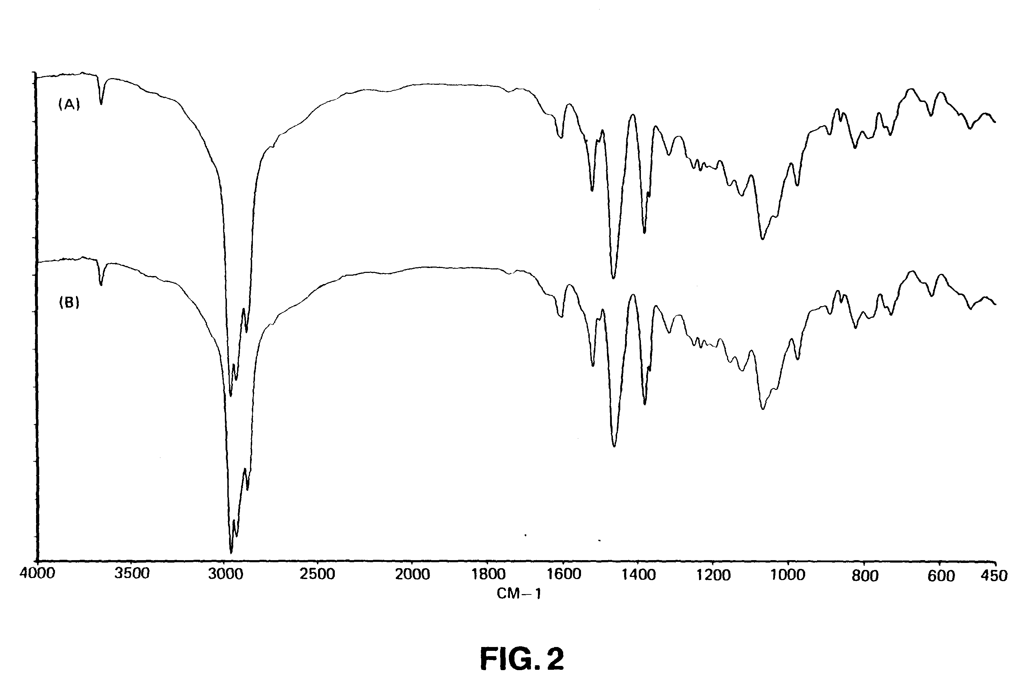

The additive composition was obtained in both methods as a yellow amber oily liquid, homogeneous, clear and bright. The infra red spectrum for the product from methods A) and B) is given in Figure 2.

The analytical data is:

| | |
|---|---|
| Phosphorus | 1.50 to 1.94% |
| Nitrogen | 0.99 to 1.30% |
| Sulphur | 17.2 to 23.3% |
| Density | 0.98 g/ml (typical) |
| Flash Point (PMC) | 50°C (min) |
| Viscosity 100/40°C | 10/143c St |

### Example 3 Use of Additive Composition in Hydraulic Oils

The additive composition described in Example 2 above was blended into base fluids as given in Table 1 below to give two ISO VG 46 to 68 hydraulic oils and subjected to a series of standard tests as given in the Table. It is to be noted that the test results are of the level not normally expected for zinc free ashless compositions. The additive composition has provided a high standard hydraulic oil performance and, in particular, very low wear rates in the Vane pump test.

**TABLE 1**

| Base Fluid | Test Ref. | Fluid 1 BP Virgin | Fluid 2 BP Virgin | Fluid 3 Re-refined mineral oil |
|---|---|---|---|---|
| Additive Comp | | 0.80 wt. % | 0.80 wt. % | 0.90 wt. %# |
| Viscosity cSt @ 40°C | IP 71 | 47.3 | 68 | 46 |
| Steel Corrosion | IP 135 | Pass A+B | Pass A+B | Pass A+B |
| Copper Corrosion | IP 154 | 1b | 1b | 1b |
| TOST (1000 hr, | DEF STAN | | | |
| MG koh/gm increase) | 0550/57 | 1.20* | --- | 0.24 |
| Foam 1 mis/mls @ sec | IP 146 | 0 | 0 | 0 |
| 2 " | | 20/0 @ 5 | 20/0 @ 3 | 20/0 @ 5 |
| 3 " | | | 0 | 0 |
| Timken O.K. Load (Ib) | IP 240 | 50 | --- | --- |
| FZG stage | CEC | pass 11, | --- | pass 12 |
| | L-07-A-85 | fail 12 | | |
| Vane Pump | IP 218 | | | |
| Ring wt. loss mg | | 5.1 (120 max) | --- | 21.7 |
| Vane wt. loss mg | | 0.8 (30 max) | --- | 16.4 |
| Wt. loss, mg/hr | IP 281 | 0.00236 | --- | 0.15 |

| | | | | |
|---|---|---|---|---|
| * This formulation contained an additional 0.1% antioxidant | | | | |
| # Additive composition of Example 2 plus additional 0.1% antioxidant. | | | | |

### Example 4 Use of Additive Composition in Gear Oils

The additive composition described in Example 2 above without antioxidants was blended into base fluids as given in Tables 2 and 3 below to give gear oils in the ISO 100 to ISO 320 range. The blends were subjected to a series of standard tests as given in the Tables.

**TABLE 2**

| Test | Units | ISO VG.100 | ISO VG.150 | ISO VG.220 | ISO VG.320 |
|---|---|---|---|---|---|
| **Rust Test, IP 135B** (Based on 1.45% wt) | | No Rust | - | - | No Rust |
| **4 ball Wear Test. IP 239 1.45% wt** | | | | | |
| 1 hr, 20 kg, 1800 rpm: | | | | | |
| MWSD | mm | 0.28 | 0.32 | 0.32 | 0.27 |
| ISL | kg | 130 | 120 | 160 | 110 |
| Weld Point | kg | 220 | 240 | 250 | 250 |
| **1.50% wt** | | | | | |
| 1 hr, 20 kg, 1800 rpm: | | | | | |
| MWSD | mm | 0.35 | 0.30 | - | - |
| ISL | kg | 130 | 115 | - | - |
| Weld Point | kg | 240 | 240 | - | - |
| **1.55%wt** | | | | | |
| 1 hr, 20 kg, 1800 rpm; | | | | | |
| MWSD | kg | 0.35 | 0.30 | - | - |
| ISL | kg | 140 | 140 | - | - |
| Weld Point | kg | 240 | 240 | - | - |

It will be seen from the above Table that there was provided satisfactory gear oil performance at an additive combination of 1.45% for ISO V.G. 150 and above and an additive treat rate of 1.50% for ISO V.G. 100.

**TABLE 3**

| Test | Method | Units | Gear Oil V.G. 100 + 1.5% Additive Composition | V.G. Limits |
|---|---|---|---|---|
| Viscosity at 40°C | IP 71 | cSt | 103.0 | 9.50 - 105.0 |
| Viscosity at 100°C | IP 71 | cSt | 11.3 | - |
| Viscosity Index | IP 226 | - | 95 | 95 min |
| Air Release Value, 50°C | IP 313 | mins | 14.1 | 18 max |
| Foam Sequence 1:- | IP 146 | | | |
| Tendency | | mls | nil | 75 max |
| Stability | | mls | nil | Trace max |
| Flash Point, PMC | IP 34 | °C | 198 | 190 min |
| Sulphur content | ICP | % | 1.24 | - |
| Phosphorus content | ICP | % | 0.03 | - |
| Copper Corrosion | IP 154 | | | |
| 3 hrs at 120°C | | - | 1b | Class 3 max |
| Rust Test | IP 135B | - | No Rust | No Rust |
| Oxidation at 121°C | ASTM D2893 | | | |
| Increase in Viscosity at 100°C | | % | 4.4 | 6 max |
| 4 Ball Wear Test | IP 239 | | | |
| 1 hr, 20 kg 1800 rpm; | | | | |
| MWSD | | mm | 0.35 | 0.35 max |
| ISL | | kg | 130 | - |
| Weld Point | | kg | 250 | 250 min |
| FZG, Fail Stage | DIN 51354 | - | > 12 | 12 min |
| Timken OK Load | IP 240 | lbs | 65 | 60 mins |

### Example 5 Use of Modified Additive Compositions

Further test fluids were prepared containing additive compositions prepared using the methods described in Examples 1 and 2 and using two alternative amine phosphates (one prepared using ARMEEN O and one prepared using iso-nonyloxypropylamine) and polysulphide and/or dialkyl phosphite additives in an amount of 1.0%/0.09 and 0.1%. The compositions were tested for anti-wear performance in accordance with IP 239. The compositions and results are given in Table 3 below. The base fluid was B.P. 150 Solvent neutral.

**TABLE 4**

| | 1 | 2 | 3 | 4 | 5 | 6 | 7 | 8 | 9 |
|---|---|---|---|---|---|---|---|---|---|
| 1) n-heptylacid phosphate + isononyloxypropylamine (WT.%) | - | - | - | - | - | - | 0.17 | 0.17 | 0.17 |
| 2) n-heptylacid phospate + PRIMENE 81R (wt.%) | 0.17 | 0.17 | - | - | 0.17 | - | - | - | - |
| 3) n-heptylacid phosphate + ARMEEN 0 (wt.%) | | - | 0.17 | 0.17 | - | - | - | - | - |
| polysulphide (wt.%) | 1.O | 1.O | 1.O | 1.O | 1.O | 1.O | 1.O | 1.O | 1.O |
| phosphite (wt.%) | 0.1 | 0.09 | 0.1 | 0.09 | _ | - | - | 0.10 | 0.09 |
| mean wear scar diameter (mm) | 0.324 | 0.292 | 0.326 | 0.320 | 0.324 | 0.310 | 0.323 | 0.338 | 0.323 |

It can be seen from the above results that the preparation in Example 1, together with a dialkyl hydrogen phosphite and an amine phospate prepared using ARMEEN O and isononyloxypropylamine produce low anti-wear performance in the IP 239 Shell 4-ball test.

### Example 6 Use of Additive Composition in Synthetic Ester Hydraulic Fluids

The additive composition described in Example 2 above was blended into synthetic ester base fluids of the grades given in Table 5 below and subjected to a series of standard tests as given in the Table.

**TABLE 5**

| **Grade HE** | ·32 | 46 | 68 | Limits |
|---|---|---|---|---|
| ISO Viscosity Grade VG | 32 | 46 | 68 | 32/46/68 |
| Pour Point, °C max | - 57 | -51 | - 51 | -18/-15/-12 |
| Steel Corrosion, max (DIN 51585) | Pass | Pass | Pass | Class 0-Method A |
| Copper Corrosion max (DIN 51759) | 1b | 1b | 1b | Class 2-3 hours at 100°C |
| Air Release 50°C mins, max (DIN 51381) | <0.5 | <0.5 | 1.7 | 5/10/10 |
| Demulsibility, 54°C, mins, max (DIN 51549) | 10 | 30 | 45 | 40/40/60 |
| FZG, A8.3/90: Load Stage Fail, min | >12 | >12 | >12 | 10 |
| Vane Pump Wear, mg, max (DIN 51389/2) | | (1) | | |
| Ring} @ 250 hours (1) | | 2.5 | <120 | 120 |
| Vanes | | 7.1 | <30 | 30 |
| Baader 95°C @ 3 days (DIN 51554/3) | (2) | (2) | (2) | (2) |
| Viscosity change @ 40°C,% max | 0.7 | -0.6 | 2.7 | +20 |
| mg KOH/gm change, max | -0.15 | 0.07 | -0.08 | +0.08 |
| | | | | |
| SRE-NBR 1 - seals (DIN 3538/1) Volume change, % max | 10 | 10 | 10 | -3/+10 ± 10 |
| Hardness change, max | -9.7 | -9.6 | -9.4 | |
| Foam Volume, ml/ml @ sec. max (DIN 51566) | | | | |
| at 20°C | 60/0@35 | 0 | 0 | 150/0@120 |
| at 95°C | 0 | 0 | 40/0@120 | 75/0@120 |
| at 25°C (after 95°C) | 60/0@29 | 0 | 0 | 150/0@120 |
| Neutralisation Number mgKOH/gm (DIN 51558/1) | 0.34 | 0.38 | 0.37 | |
| Brugger, N/mm², min | 43.8 | 45 | >30 | 30 |
| Biodegradability (CECL33T82), % min | >95 | >95 | >85 | 70 |
| Viscosity Index | 151 | 172 | 184 | - |
| Copper Corrosion (DIN 51759A) @ 125°C, max | 1b | 1b | 1b | Class 1 |
| Steel Corrosion (DIN 51585B) | Pass | Pass | Pass | Pass |
| 4-Ball (ASTM D2783) Weld | | | | |
| Point, kg | 200 | 200 | 240 | - |
| Load wear index, kg | >45 | 52 | 49.5 | 45 |
| 1 hr wear @ 30 kg, MWSD, mm | >0.35 | 0.330 | 0.360 | - |
| **Seal Tests @ 168 hrs** | | | | |
| (i) Medium NBR @ 80°C | | | | |
| Volume Change, % | 6.6 | 6.4 | 6.0 | -3/+10 |
| Hardness Change | -7.3 | -7.0 | -6.9 | -10/+10 |
| (ii) Flurocarbon @ 100°C | | | | |
| Volume Change, % | 1.3 | 1.5 | 1.2 | -3/+10 |
| Hardness Change | -1.7 | -2 | -2 | -10/+10 |
| (iii) Polyurethane @ 80°C | | | | |
| Volume Change, % | 8.2 | 8.0 | 7.9 | -3/+10 |
| Hardness Change | -10 | -9.0 | -9.5 | -10/+10 |
| | | | | |
| Stear stability %, max (DIN 51382) 100°C 250 cycles, loss | - | -4.3 | - | ± 10 |

| | | | | |
|---|---|---|---|---|
| (1) DIN 51389/2 @ 250 hours | | | | |
| (2) Replaces DIN 51587 used for mineral oil based fluids. | | | | |

It will be seen from Table 5 that the fluids meet the Baader oxidation test requirement for synthetic ester base fluid hydraulic lubricants with very low viscosity and acid number increase after test. They meet the following lubricant specifications where the oxidation testing used was that developed for ester base fluids.
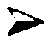 DIN 51524, part 2
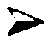 SEB 181-222
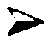 Ford U.MC 006-8004
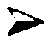 Brugger

The lubricants have been found to provide excellent corrosion protection, extreme pressure and anti-wear with a passing result in the Vickers 104C 250 hour vane pump test and very high FZG load stage performance. They are compatible with nitrile, fluorocarbon and polyurethane sealing material and their high viscosity index, low pour point and good filtration ensures that the lubricant properties are excellent.

It has been found that, when used with the applicants' water based metalworking fluids the lubricants show excellent separation properties. Their biodegradability of greater than 95% for the ISO VG 32 and 46 grade and greater than 85% for the ISO VG grade by CEC L33 T82 minimises their impact on the environment as do the properties of being heavy metal, chlorine free and ashless.

### Example 7 Use of Additive Composition in Synthetic Ester Gear Oil

The additive composition described in Example 2 above was blended into synthetic ester base fluids of the grades given in Table 6 below and subjected to a series of standard tests as given in the Table.

**TABLE 6**

| | | | | | | |
|---|---|---|---|---|---|---|
| Grade CLP | 46 | 68 | 100 | 150 | 220 | Limits 46/68/ 100/150/ 220 |
| ISO Viscosity Grade VG | 46 | 68 | 100 | 150 | 220 | DIN 515550+ 51562/1 |
| Pour Point, °C, max (ISO 3016) | -33 | -27 | -27 | -27 | -27 | -15/-15/-12/-9/6 |
| Copper Corrosion (DIN 51759) | 1b | 1b | 1b | 1b | 1b | |
| Steel Corrosion, max (DIN 51355A) | Pass | Pass | Pass | Pass | Pass | Class O |
| Ageing, Behaviour (DIN 51586) Viscosity Increase @ 100°C max | <6 | 5.6 | <6 | <6 | <5.7 | 6 |
| Precipation Number ml max | <0.1 | <0.1 | <,0.1 | <0.1 | <0.1 | 0.1 |
| FZG A8.3/90: Load Stage Fail min | >12 | >12 | >12 | >12 | >12 | 12 |
| Weight loss mg/kwh max | 0.028 | <0.3 | <0.3 | 0.006 | <0.3 | 0.3 |
| SRE-NBR 1 - seals (DIN 53538/3) Volume change, % Hardness change | 8.7 -6 | 8.9 -5 | <8.9 <-5 | <8.9 <-5 | 7.8 -4 | |
| Brugger, N/mm², min | 56.1 | 51.9 | >50 | >50 | 66.6 | 50 |
| Biodegradability, % (CE 33T82) max | >95 | >95 | >90 | >85 | >85 | 70 |
| Timkin OK Load, Ibs, min (ASTM D2783) | >60 | 85 | >60 | >60 | >90 | 60 |
| 4-ball (ASTM D 2783) Weld Point, kg, min | 260 | 280 | >250 | >250 | 260 | 250 |
| Load Wear Index min | 61.8 | 61.9 | >45 | >45 | 60.6 | 45 |
| 1 hr Wear @ 20kg MWSD, mm, max (ASTM D2266) | - | 0.304 | <0.35 | <0.35 | 0.282 | 0.35 |
| Steel Corrosion (ASTM D665B) | Pass | Pass | Pass | Pass | Pass | Pass |
| Foam Suppression, ml/ml @ sec, max (ASTM D896) | | | | | | |
| (1) | 0 | 0 | - | - | 0 | 75/0 @ 120 |
| (2) | 70% @ 19 | 70/0 @ 34 | - | - | 20/0 @ 120 | 75/0 @ 120 |
| (3) | 70/0 @ 12 | 10/0 @ 4 | - | - | 20/0 @ 6 | 75/0 @ 120 |
| | 0 | | | | | |
| Viscosity Index | 187 | 184 | >184 | >184 | 194 | - |
| Copper Corrosion (DIN 51759) @ 125°C max | 1b | 1b | 1b | 1b | 1b | Class 2 |
| Timkin Weight Loss, mg, max | | | | | | |
| 25 lbs | 0.3 | - | - | - | - | 6 |
| 30 lbs | - | 0.5 | - | - | - | 6 |
| 35 lbs | - | - | - | 0 | - | 6 |
| 40 Ibs | - | - | 0 | - | 0.4 | 6 |
| Air Release 50°C max (DIN 51381 | 3.9 | 4.1 | - | - | 21.7 | 10/10/20 30/30 |
| Demulsification 54°C min | 23 | 28 | <25 | <25 | 25 | 40/60/60 |
| (DIN51599) max | | | @ 82°C | @ 82°C | @ 82°C | /-/- |
| Seal Tests @ 168 hrs max | | | | | | |
| (i) Medium NBR @ 80°C | | | | | | |
| Volume change % | -1.9 | -1.4 | - | - | -0.8 | +3/+10 |
| Hard Change | 1 | 2 | - | - | 4 | -10/+10 |
| (ii) Flurocarbon @ 100°C | | | | | | |
| Volume Change % | -0.9 | 0.2 | - | - | 0 | +3/+10 |
| Hardness Change | -2 | -1 | - | - | 0 | -10/+10 |
| (iii) Polyurethane @ 80°C Volume Change % | 0.2 | 0.6 | - | - | 0 | +3/+10 |
| Hardness Change | 0 | -1 | - | - | -1 | -10/+10 |
| Stear stability %, max (CEC-4-45-T-93/A) 100°C loss | | | | | | ± 10 |
| | <10 | <10 | <10 | <10 | -8.7 | |

It will be seen from Table 6 that the lubricants meet the following intemationally recognised specifications that were originally designed for mineral oil based fluids.
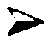 DIN 51517, part 3
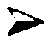 SEB 181-222
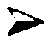 Ford U-MC 002-8008
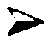 U.S. Steel 224
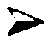 Brugger

We have found that the lubricants provide excellent corrosion protection, extreme pressure and anti-wear performance with an FZG load stage pass greater than 12. They are compatible with nitrile, fluorocarbon and polyurethane sealing material and their high viscosity index, low pour point and good filtration ensures that their lubrication properties are excellent.

Biodegradability of greater than 85% for the 220 grade and greater than 95% for the lower viscosity lubricants minimises the impact on the environment as does the properties of being heavy metal, chlorine free and ashless.

## Claims

1. Use of an additive composition comprising an amine phosphate which is the reaction product of at least one n-heptyl acid phosphate with at least one aliphatic amine having at least 9 carbon atoms, to improve antiwear, corrosion resistance or extreme pressure properties in an industrial fluid comprising a mineral base oil or a natural or synthetic ester base fluid.

2. Use according to claim 1 wherein the aliphatic amine has at least 12 carbon atoms.

3. Use according to claim 2 wherein the amine is a p-amine.

4. Use according to claim 3 wherein the amine is a C₁₂₋₁₄ alkylamine, a C₁₈ alkenylamine, or an alkoxylalkylamine.

5. Use according to any one of the preceding claims wherein the amine phosphate component is present as a monoheptyl phoshpate or a di-heptylphosphate or a mixture thereof.

6. Use according to any one of the preceding claims wherein the additive composition further comprising additives selected from polysulphides, dialkylhydrogen phosphites, tri-alkyl phosphates, tri-aryl phosphates, alkyl dithiadiazoles, benzotriazoles, alkylp-amines, antifoam agents and anti-oxidants.

7. Use according to any one of the preceding claims in which the amine phosphate component has been prepared in situ by separately adding to a suitable diluent the acid phosphate and the amine and blending before adding the remaining additives.

8. Use according to any one of the preceding claims wherein the additive composition includes a dialkyl hydrogen phosphite which has been added after addition of other additives.

9. Use according to any one of the preceding claims wherein the amine phosphate component of the additive composition is present in an amount of from about 0.05 to about 0.09 weight per cent, and the industrial fluid is intended for hydraulic use.

10. Use according to any one of claims 1-9, wherein the amine phosphate component of the additive composition is present in an amount of from about 0.09 to about 0.17 weight percent, and the industrial fluid is intended for gear oil use.

## Patentansprüche

1. Verwendung einer Additiv-Zusammensetzung, die ein Aminphosphat umfaßt, welches das Reaktionsprodukt von mindestens einem Phosphorsäure-n-heptylester mit mindestens einem aliphatischen Amin mit mindestens 9 Kohlenstoffatomen ist, zur Verbesserung des Verschleißschutzes, der Korrosionsbeständigkeit oder extremer Druckeigenschaften in einer industriellen Flüssigkeit, die ein Öl auf Mineralgrundlage oder eine Flüssigkeit auf einer natürlichen oder synthetischen Estergrundlage umfaßt.

2. Verwendung nach Anspruch 1, worin das aliphatische Amin mindestens 12 Kohlenstoffatome aufweist.

3. Verwendung nach Anspruch 2, worin das Amin ein p-Amin ist.

4. Verwendung nach Anspruch 3, worin das Amin ein C₁₂₋₁₄-Alkylamin, ein C₁₈-Alkenylamin oder ein Alkoxyalkylamin ist.

5. Verwendung nach einem der vorangehenden Ansprüche, worin die Aminphosphatkomponente als ein Monoheptylphosphat oder ein Diheptylphosphat oder ein Gemisch davon vorliegt.

6. Verwendung nach einem der vorangehenden Ansprüche, worin die Additiv-Zusammensetzung überdies Additive umfaßt, die aus Polysulfiden, Dialkylhydrogenphosphiten, Trialkylphosphaten, Triarylphosphaten, Alkyldithiadiazolen, Benzotriazolen, Alkyl-p-Aminen, Antischaummitteln und Antioxidantien ausgewählt werden.

7. Verwendung nach einem der vorangehenden Ansprüche, worin die Aminphosphatkomponente durch getrenntes Zufügen des sauren Phosphats und des Amins zu einem geeigneten Verdünnungsmittel und Mischen vor Zufügen der übrigen Additive in situ hergestellt wurde.

8. Verwendung nach einem der vorangehenden Ansprüche, worin die Additiv-Zusammensetzung ein Dialkylhydrogenphosphit einschließt, das nach Zugabe anderer Additive zugefügt wurde.

9. Verwendung nach einem der vorangehenden Ansprüche, worin die Aminphosphatkomponente der Additiv-Zusammensetzung in einer Menge von circa 0,05 bis circa 0,09 Gew.-% vorliegt und die industrielle Flüssigkeit zur hydraulischen Verwendung beabsichtigt ist.

10. Verwendung nach einem der Ansprüche 1-9, worin die Aminphosphatkomponente der Additiv-Zusammensetzung in einer Menge von circa 0,09 bis circa 0,17 Gew.-% vorliegt und die industrielle Flüssigkeit zur Verwendung als Getriebeöl beabsichtigt ist.

## Revendications

1. Utilisation d'une composition d'additifs comprenant un phosphate aminé qui est le produit de réaction d'au moins un phosphate acide n-heptyle avec au moins un amine aliphatique possédant au moins 9 atomes de carbone, afin d'améliorer les propriétés anti-usure, de résistance à la corrosion ou de pression extrême, dans un fluide industriel comprenant une huile à base minérale ou un fluide à base d'ester synthétique ou naturel.

2. Utilisation, selon la revendication 1, dans laquelle l'amine aliphatique possède au moins 12 atomes de carbone.

3. Utilisation, selon la revendication 2, dans laquelle l'amine est un p-amine.

4. Utilisation, selon la revendication 3, dans laquelle l'amine est un C₁₂₋₁₄ alkylamine, un C₁₈ alkenylamine, ou un alkoxylalkylamine.

5. Utilisation, selon l'une quelconque des revendications précédentes, dans laquelle le composant phosphate aminé est présent sous la forme d'un phosphate monoheptyle ou d'un di-heptylphosphate ou d'un mélange de ceux-ci.

6. Utilisation, selon l'une quelconque des revendications précédentes, dans laquelle la composition d'additifs comprend en outre des additifs sélectionnés à partir de polysulphides, phosphites de dialkyl-hydrogène, phosphates tri-alkyles, phosphates tri-aryles, dithiadiazoles d'alkyle, benzotriazoles, alkylp-amines, d'agents anti-mousse et d'anti-oxydants.

7. Utilisation, selon l'une quelconque des revendications précédentes, dans laquelle le composant phosphate aminé a été préparé in situ en ajoutant séparément à un diluant approprié le phosphate acide et l'amine et en procédant au mélange avant d'ajouter les additifs restants.

8. Utilisation, selon l'une quelconque des revendications précédentes, dans laquelle la composition d'additifs inclut un phosphite de dialkyl-hydrogène qui a été ajouté après l'adjonction des autres additifs.

9. Utilisation, selon l'une quelconque des revendications précédentes, dans laquelle le composant phosphate aminé de la composition des additifs est présent dans une quantité égale à entre 0,05 et 0,09 pour cent environ en poids, et le fluide industriel est destiné à une utilisation hydraulique.

10. Utilisation, selon l'une quelconque des revendications précédentes 1 à 9, dans laquelle le composant phosphate aminé de la composition des additifs est présent dans une quantité égale à entre 0,09 et 0,17 pour cent environ en poids, et le fluide industriel est destiné à une utilisation pour huiles d'engrenages.
